# EUROPÄISCHE PATENTANMELDUNG

(11) **EP 4 450 705 A1**
(43) Veröffentlichungstag der Anmeldung: **23.10.2024**
(21) Anmeldenummer: 24160429.7
(22) Anmeldetag: 29.02.2024
(51) Int. Cl.: E01B 29/00, E01B 31/00, E01B 29/26, E01B 29/28, E01B 31/06, E01B 31/17

(54) **BEARBEITUNGSMASCHINE UND VERFAHREN ZUR GLEISBEARBEITUNG**

(30) Priorität: 17.04.2023 DE 102023203452
(71) Anmelder: Robel Bahnbaumaschinen GmbH, 83395 Freilassing (DE)
(72) Erfinder: Hölzlwimmer, Thomas, 84508 Burgkirchen an der Alz (DE)
(74) Vertreter: Rau, Schneck & Hübner Patentanwälte Rechtsanwälte PartGmbB

(57) **Zusammenfassung**

Eine Bearbeitungsmaschine (1) zur Gleisbearbeitung umfasst einen Träger (6), eine an dem Träger (6) angeordnete Verlagerungseinrichtung (7), mindestens eine an dem Träger (6) angeordnete Bearbeitungseinheit (13, 14) zur Bearbeitung eines Gleises (2) und mindestens einen Handgriff (33, 34) zum manuellen Führen der Bearbeitungsmaschine (1). Die Verlagerungseinrichtung (7) umfasst mindestens eine Schiene-Gelände-Verlagerungseinheit (8, 9) zum Verlagern der Bearbeitungsmaschine (1) auf einer Schiene (3) und im Gelände (G). Die Bearbeitungsmaschine (1) ermöglicht eine einfache, flexible, bedienerfreundliche und effiziente Gleisbearbeitung.

## Beschreibung

Der Inhalt der deutschen Patentanmeldung DE 10 2023 203 452.2 wird durch Bezugnahme hierin aufgenommen.

Die Erfindung betrifft eine Bearbeitungsmaschine und ein Verfahren zur Gleisbearbeitung. Insbesondere betrifft die Erfindung eine Bearbeitungsmaschine, die zur Gleisbearbeitung auf einer ersten Schiene verfahrbar und auf einer benachbarten zweiten Schiene abstützbar ist.

Aus der DE 20 2016 006 565 U1 ist eine Bearbeitungsmaschine zur Gleisbearbeitung in Form einer Schraubmaschine bekannt. Die Schraubmaschine umfasst ein Traggestell, an dem zwei in Schienenlängsrichtung nacheinander angeordnete Spurkranzrollen angeordnet sind, so dass die Schraubmaschine mittels eines Handgriffs manuell auf einer ersten Schiene verschiebbar ist. An dem Traggestell ist ein Ausleger mit einer daran drehbar gelagerten Laufrolle angeordnet, so dass die Schraubmaschine an einer benachbarten zweiten Schiene abgestützt ist. Der Ausleger mit der Laufrolle ist einfach lösbar mit dem Traggestell verbunden. Die Schraubmaschine umfasst zwei Schraubeinheiten, die beidseitig zu den Spurkranzrollen an dem Traggestell befestigt sind, so dass beidseitig der ersten Schiene angeordnete Schrauben angezogen oder gelöst werden können. Dadurch, dass die Schraubmaschine auf nur einer Schiene verlagerbar ist und sich an der benachbarten Schiene lediglich abstützt, ist das Eingleisen und das Ausgleisen der Schraubmaschine in einfacher Weise möglich.

Der Erfindung liegt die Aufgabe zugrunde, eine Bearbeitungsmaschine zu schaffen, die eine einfache, flexible, bedienerfreundliche und effiziente Gleisbearbeitung ermöglicht.

Diese Aufgabe wird durch eine Bearbeitungsmaschine mit den Merkmalen des Anspruchs 1 gelöst. Die an dem Träger der Bearbeitungsmaschine angeordnete Verlagerungseinrichtung umfasst mindestens eine Schiene-Gelände-Verlagerungseinheit zum Verlagern der Bearbeitungsmaschine auf einer Schiene und im Gelände. Erfindungsgemäß wurde erkannt, dass bei den im Stand der Technik bekannten Bearbeitungsmaschinen der Transport zu dem zu bearbeitenden Gleis oftmals schwierig und bedienerunfreundlich ist, da die Bearbeitungsmaschinen im Gelände nur schwer oder überhaupt nicht manuell verschiebbar sind und deshalb regelmäßig manuell getragen oder aufwändig mittels Hilfsfahrzeugen an- und abtransportiert werden müssen. Dadurch, dass die Verlagerungseinrichtung der erfindungsgemäßen Bearbeitungsmaschine mindestens eine Schiene-Gelände-Verlagerungseinheit umfasst, ist ein einfaches, flexibles und bedienerfreundliches Verlagern der Bearbeitungsmaschine im Gelände zu dem zu bearbeitenden Gleis und ein Verlagern der Bearbeitungsmaschine auf einer Schiene bei der Gleisbearbeitung möglich. Hierdurch wird die Effizienz der Bearbeitungsmaschine und der Gleisbearbeitung verbessert.

Vorzugsweise umfasst die Bearbeitungsmaschine mindestens eine erste Verlagerungseinheit und eine zweite Verlagerungseinheit, die an dem Träger angeordnet sind. Die erste Verlagerungseinheit ist eine Schiene-Gelände-Verlagerungseinheit. Demgegenüber kann die zweite Verlagerungseinheit eine Schiene-Verlagerungseinheit oder eine Gelände-Verlagerungseinheit oder eine Schiene-Gelände-Verlagerungseinheit sein. Vorzugsweise ist sowohl die erste Verlagerungseinheit eine Schiene-Gelände-Verlagerungseinheit als auch die zweite Verlagerungseinheit eine Schiene-Gelände-Verlagerungseinheit. Die erste Verlagerungseinheit und die zweite Verlagerungseinheit sind in einer Längsrichtung des Trägers, die einer Schienenlängsrichtung entspricht, nacheinander angeordnet. Die erste Schiene-Gelände-Verlagerungseinheit und die zweite Schiene-Gelände-Verlagerungseinheit dienen somit zur Anordnung des Trägers auf derselben Schiene. Vorzugsweise sind die erste Verlagerungseinheit und die zweite Verlagerungseinheit in der Längsrichtung endseitig an dem Träger angeordnet. Die Schiene-Verlagerungseinheit ist beispielsweise als Spurkranzrolle bzw. Führungsrolle ausgebildet. Die Gelände-Verlagerungseinheit ist beispielsweise als Rad ausgebildet.

Die mindestens eine Schiene-Gelände-Verlagerungseinheit, insbesondere die jeweilige Schiene-Gelände-Verlagerungseinheit, ist integriert ausgebildet. Dies bedeutet, dass die Schiene-Gelände-Verlagerungseinheit nicht durch eine separate Schiene-Verlagerungseinheit und durch eine separate Gelände-Verlagerungseinheit ausgebildet ist, die relativ zueinander verstellbar, insbesondere höhenverstellbar, sind, so dass entweder die Schiene-Verlagerungseinheit oder die Gelände-Verlagerungseinheit im Einsatz ist.

Die mindestens eine Schiene-Gelände-Verlagerungseinheit, insbesondere die jeweilige Schiene-Gelände-Verlagerungseinheit, ist vorzugsweise hängend an dem Träger angeordnet. Vorzugsweise umfasst die Schiene-Gelände-Verlagerungseinheit einen Verlagerungsgrundkörper, der mittels eines zugehörigen Befestigungselements an dem Träger befestigt. Das Befestigungselement kann einseitig oder zweiseitig an dem Verlagerungsgrundkörper angeordnet sein. Bei einer zweiseitigen Anordnung ist das Befestigungselement insbesondere gabelförmig ausgebildet.

Die Bearbeitungsmaschine dient beispielsweise zum Schrauben, Klippen, Bohren, Nageltreiben, Nagelziehen und/oder Schleifen. Dementsprechend umfasst die Bearbeitungsmaschine beispielsweise mindestens eine Schraubeinheit, mindestens eine Klippeinheit, mindestens eine Bohreinheit, mindestens eine Nageltreibeinheit, mindestens eine Nagelzieheinheit und/oder mindestens eine Schleifeinheit als Bearbeitungseinheit. Die mindestens eine Bearbeitungseinheit ist in der Längsrichtung des Trägers insbesondere zwischen der ersten Verlagerungseinheit und der zweiten Verlagerungseinheit an dem Träger angeordnet. Die mindestens eine Bearbeitungseinheit ist insbesondere hängend an dem Träger angeordnet.

Die Bearbeitungsmaschine ist insbesondere manuell führbar und/oder insbesondere manuell betätigbar. Vorzugsweise ist die Bearbeitungsmaschine auf einer ersten Schiene verlagerbar, insbesondere verfahrbar, und auf einer benachbarten zweiten Schiene abstützbar ausgebildet.

Eine Bearbeitungsmaschine nach Anspruch 2 gewährleistet eine einfache, flexible, bedienerfreundliche und effiziente Gleisbearbeitung. Dadurch, dass die mindestens eine Schiene-Gelände-Verlagerungseinheit, insbesondere die jeweilige Schiene-Gelände-Verlagerungseinheit, eine Lauffläche ausbildet, die mindestens eine Gelände-Lauffläche und mindestens eine Schiene-Lauffläche umfasst, ist die Schiene-Gelände-Verlagerungseinheit integriert ausgebildet. Die mindestens eine Gelände-Lauffläche und die mindestens eine Schiene-Lauffläche sind in einer Querrichtung der Bearbeitungsmaschine nebeneinander angeordnet. Die Querrichtung verläuft quer, insbesondere senkrecht, zu der Längsrichtung des Trägers.

Die mindestens eine Schiene-Gelände-Verlagerungseinheit, insbesondere die jeweilige Schiene-Gelände-Verlagerungseinheit, umfasst einen Verlagerungsgrundkörper. Der Verlagerungsgrundkörper kann aus einem metallischen Material, einem Kunststoffmaterial und/oder aus einem Holzmaterial ausgebildet sein. Die mindestens eine Gelände-Lauffläche und/oder die mindestens eine Schiene-Lauffläche kann unmittelbar durch den Verlagerungsgrundkörper ausgebildet sein. Der Verlagerungsgrundkörper kann im Querschnitt rund oder polygonal mit abgerundeten Ecken ausgebildet sein.

Die mindestens eine Schiene-Gelände-Verlagerungseinheit, insbesondere die jeweilige Schiene-Gelände-Verlagerungseinheit, umfasst insbesondere mindestens ein Kontaktelement, das an einem Verlagerungsgrundkörper angeordnet ist. Das mindestens eine Kontaktelement bildet vorzugsweise die mindestens eine Gelände-Lauffläche und/oder die mindestens eine Schiene-Lauffläche aus. Das mindestens eine Kontaktelement kann aus einem metallischen Material, einem Kunststoffmaterial und/oder einem Elastomermaterial ausgebildet sein. Das Kunststoffmaterial umfasst beispielsweise ein thermoplastisches Kunststoffmaterial und/oder ein duroplastisches Kunststoffmaterial. Das mindestens eine Kontaktelement ist insbesondere fest und/oder verlagerbar an dem Verlagerungsgrundkörper angeordnet. Das mindestens eine Kontaktelement ist insbesondere in einer Umfangsrichtung um den Verlagerungsgrundkörper verlagerbar und/oder in einer Querrichtung, also seitlich, zu dem Verlagerungsgrundkörper verlagerbar.

Das mindestens eine Kontaktelement ist insbesondere als Kette und/oder Riemen ausgebildet, beispielsweise als Metallkette, Gummikette und/oder Gummiriemen. Die Kette und/oder der Riemen ist insbesondere um den Verlagerungsgrundkörper umlaufend und geschlossen ausgebildet. Die Kette und/oder der Riemen ist an dem Verlagerungsgrundkörper angeordnet und vorzugsweise in einer Umfangsrichtung um den Verlagerungsgrundkörper und/oder in einer Querrichtung, also seitlich, zu dem Verlagerungsgrundkörper verlagerbar. Die Kette und/oder der Riemen bilden vorzugsweise die mindestens eine Gelände-Lauffläche und/oder die mindestens eine Schiene-Lauffläche aus.

Das mindestens eine Kontaktelement ist insbesondere als Ring ausgebildet. Der Ring ist insbesondere aus einem metallischen Material, einem Kunststoffmaterial und/oder einem Elastomermaterial ausgebildet. Vorzugsweise sind ein erster Ring und ein zweiter Ring als Kontaktelemente an einem Verlagerungsgrundkörper angeordnet, der radförmig bzw im Querschnitt rund ausgebildet ist. Vorzugsweise ist mindestens ein Ring, insbesondere beide Ringe, in einer Querrichtung zu dem Verlagerungsgrundkörper verlagerbar. Der mindestens eine Ring bildet insbesondere die mindestens eine Gelände-Lauffläche und/oder die mindestens eine Schiene-Lauffläche aus. Vorzugsweise bildet der Verlagerungsgrundkörper eine Schiene-Lauffläche und zwei Ringe jeweils eine Gelände-Lauffläche aus.

Vorzugweise weist die mindestens eine Gelände-Lauffläche einen größeren Abstand als die mindestens eine Schiene-Lauffläche zu einer Mittellängsachse des Verlagerungsgrundkörpers auf. Die mindestens eine Gelände-Lauffläche hat insbesondere einen Abstand A_{G}, wobei insbesondere gilt: 5 cm ≤ A_{G} ≤ 30 cm, insbesondere 10 cm ≤ A_{G} ≤ 25 cm, und insbesondere 15 cm ≤ A_{G} ≤ 20 cm. Die mindestens eine Schiene-Lauffläche hat insbesondere einen Abstand As von einer Mittellängsachse des Verlagerungsgrundkörpers, wobei für den Abstand As insbesondere gilt: 4 cm ≤ A_{S} ≤ 29 cm, insbesondere 9 cm ≤ A_{S} ≤ 24 cm, und insbesondere 14 cm ≤ A_{S} ≤ 19 cm. Für eine Differenz ΔA = A_{G} - As gilt insbesondere: 1 cm ≤ ΔA ≤ 8 cm, insbesondere 2 cm ≤ ΔA ≤ 7 cm, und insbesondere 3 cm ≤ ΔA ≤ 6 cm.

Vorzugsweise ist die mindestens eine Gelände-Lauffläche in einer Umfangsrichtung und/oder in einer Querrichtung des Verlagerungsgrundkörpers profiliert ausgebildet. Die mindestens eine Gelände-Lauffläche weist insbesondere in einer Umfangsrichtung und/oder in einer Querrichtung des Verlagerungsgrundkörpers Erhöhungen auf. Die Erhöhungen sind insbesondere als Noppen und/oder Stollen ausgebildet.

Eine Bearbeitungsmaschine nach Anspruch 3 gewährleistet eine einfache, flexible, bedienerfreundliche und effiziente Gleisbearbeitung. Dadurch, dass die Schiene-Lauffläche in einer Querrichtung zwischen den zwei Gelände-Laufflächen ausgebildet ist, kann die Lauffläche auf den Querschnitt einer Schiene angepasst werden. Vorzugsweise ist ein Abstand A_{G} der Gelände-Laufflächen von einer Mittellängsachse des Verlagerungsgrundkörpers größer als ein Abstand As der Schiene-Lauffläche, so dass die Lauffläche eine Vertiefung zur Aufnahme eines Schienenkopfs der Schiene ausbildet. Die zwei Gelände-Laufflächen sind insbesondere in einer Querrichtung, also in der Richtung der Mittellängsachse des Verlagerungsgrundkörpers, im Abstand zueinander einstellbar. Hierdurch kann die Lauffläche auf unterschiedlich breite Schienenköpfe von Schienen angepasst werden. Beispielsweise werden die Gelände-Laufflächen durch zwei Ringe ausgebildet, die an einem radförmigen bzw. im Querschnitt runden Verlagerungsgrundkörper verstellbar angeordnet sind. Zum Verstellen dient insbesondere eine Verstellmechanik. Die Verstellmechanik ist vorzugsweise in einer gewünschten Position arretierbar.

Eine Bearbeitungsmaschine nach Anspruch 4 gewährleistet eine einfache, flexible, bedienerfreundliche und effiziente Gleisbearbeitung. Die Lauffläche bildet im Querschnitt betrachtet zumindest abschnittsweise eine Vertiefung zur Aufnahme eines Schienenkopfs einer Schiene aus. Hierdurch kann die mindestens eine Schiene-Gelände-Verlagerungseinheit, insbesondere die jeweilige Schiene-Gelände-Verlagerungseinheit, einfach und bedienerfreundlich auf einer Schiene geführt und verlagert werden. Durch die Vertiefung zentriert sich die Lauffläche relativ zu der Schiene selbst. Die Vertiefung weist insbesondere einen sich erweiternden Querschnitt auf. Der sich erweiternde Querschnitt ist vorzugsweise V-förmig und/oder U-förmig ausgebildet. Die Vertiefung ist insbesondere in ihrer Querschnittsform einstellbar, beispielsweise dadurch, dass mindestens eine Gelände-Lauffläche relativ zu einer Schiene-Lauffläche verlagerbar ist, insbesondere in einer Querrichtung eines Verlagerungsgrundkörpers verlagerbar ist. Hierdurch kann die Vertiefung an unterschiedliche Größen von Schienenköpfen angepasst werden. Beispielsweise wird die Gelände-Lauffläche durch einen Ring ausgebildet, der in einer Querrichtung verstellbar an dem Verlagerungsgrundkörper befestigt ist.

Die mindestens eine Schiene-Gelände-Verlagerungseinheit, insbesondere die jeweilige Schiene-Gelände-Verlagerungseinheit, bildet vorzugsweise eine Lauffläche aus, die zwei Gelände-Laufflächen und eine dazwischen angeordnete Schiene-Lauffläche umfasst. Vorzugsweise sind die Gelände-Laufflächen in einer Umfangsrichtung und/oder in einer Querrichtung des Verlagerungsgrundkörpers profiliert ausgebildet. Die mindestens eine Gelände-Lauffläche weist insbesondere in einer Umfangsrichtung und/oder in einer Querrichtung des Verlagerungsgrundkörpers Erhöhungen auf. Die Erhöhungen sind insbesondere als Noppen und/oder Stollen ausgebildet. Die Erhöhungen weisen insbesondere zu der Schiene-Lauffläche hin eine Fase und/oder eine Rundung auf. Hierdurch passt sich die Lauffläche ohne eine erforderliche Verstellung an unterschiedlich breite Schienenköpfe an.

Eine Bearbeitungsmaschine nach Anspruch 5 gewährleistet eine einfache, flexible, bedienerfreundliche und effiziente Gleisbearbeitung. Vorzugsweise umfasst eine Schiene-Gelände-Verlagerungseinheit oder mehrere Schiene-Gelände-Verlagerungseinheiten oder jede Schiene-Gelände-Verlagerungseinheit einen zugehörigen Verlagerungsantrieb. Der jeweilige Verlagerungsantrieb ist insbesondere als elektrischer Antriebsmotor ausgebildet. Der jeweilige Verlagerungsantrieb dient insbesondere zum Antreiben eines Verlagerungsgrundkörpers der Schiene-Gelände-Verlagerungseinheit um eine Mittellängsachse und/oder zum Antreiben eines Kontaktelements in Umfangsrichtung um einen Verlagerungsgrundkörper der Schiene-Gelände-Verlagerungseinheit. Der Verlagerungsantrieb kann in den zugehörigen Verlagerungsgrundkörper integriert sein. Die Bearbeitungsmaschine umfasst insbesondere eine Steuereinrichtung zum Ansteuern des jeweiligen Verlagerungsantriebs. Die Steuereinrichtung ist insbesondere derart ausgebildet, dass die Verlagerungsantriebe unabhängig voneinander und/oder synchron zueinander ansteuerbar sind.

Eine Bearbeitungsmaschine nach Anspruch 6 gewährleistet eine einfache, flexible, bedienerfreundliche und effiziente Gleisbearbeitung. Die mindestens eine Lenkeinheit ermöglicht ein einfaches Verlagern bzw. Verfahren der Bearbeitungsmaschine im Gelände. Vorzugsweise dient die mindestens eine Lenkeinheit zum Verschwenken mindestens einer Verlagerungseinheit, insbesondere einer Schiene-Gelände-Verlagerungseinheit relativ zu dem Träger. Die mindestens eine Lenkeinheit ist insbesondere um eine vertikale Schwenkachse relativ zu dem Träger verschwenkbar. Die mindestens eine Lenkeinheit dient vorzugsweise zum manuellen Verschwenken. Die mindestens eine Lenkeinheit umfasst beispielsweise ein Schwenklager, ein Lenkgestänge und/oder mindestens einen Handgriff, insbesondere mindestens zwei Handgriffe. Vorzugsweise ist die mindestens eine Lenkeinheit mit einer zugehörigen Verlagerungseinheit, insbesondere einer Schiene-Gelände-Verlagerungseinheit, verbunden, die einen Verlagerungsantrieb umfasst.

Eine Bearbeitungsmaschine nach Anspruch 7 gewährleistet eine einfache, flexible, bedienerfreundliche und effiziente Gleisbearbeitung. Die erste Schiene-Gelände-Verlagerungseinheit und die zweite Schiene-Gelände-Verlagerungseinheit sind insbesondere endseitig und/oder hängend an dem Träger angeordnet. Die Längsrichtung entspricht einer Schienenlängsrichtung. Dadurch, dass die Schiene-Gelände-Verlagerungseinheiten hängend an dem Träger angeordnet sind, begrenzen die Schiene-Gelände-Verlagerungseinheiten und der Träger einen Aufnahmeraum, der zu einer Schiene hin offen ist. In dem Aufnahmeraum ist die mindestens eine Bearbeitungseinheit und/oder eine Energieversorgungseinheit angeordnet. Die mindestens eine Bearbeitungseinheit und/oder die Energieversorgungseinheit ist insbesondere hängend an dem Träger angeordnet.

Eine Bearbeitungsmaschine nach Anspruch 8 gewährleistet eine einfache, flexible, bedienerfreundliche und effiziente Gleisbearbeitung. Die mindestens eine Bearbeitungseinheit ist insbesondere hängend an dem Träger angeordnet. Vorzugsweise ist eine erste Bearbeitungseinheit an einer ersten Seite des Trägers und eine zweite Bearbeitungseinheit an einer zweiten Seite des Trägers zwischen den Schiene-Gelände-Verlagerungseinheiten angeordnet. Hierdurch ist eine Gleisbearbeitung an zwei Seiten einer Schiene möglich.

Eine Bearbeitungsmaschine nach Anspruch 9 gewährleistet eine einfache, flexible, bedienerfreundliche und effiziente Gleisbearbeitung. Dadurch, dass die Bearbeitungsmaschine zwei Lenkeinheiten umfasst, ist das Verlagern der Gleisbearbeitungsmaschine im Gelände sowie das Eingleisen und Ausgleisen der Bearbeitungsmaschine äußerst einfach und bedienerfreundlich. Die Lenkeinheiten können abhängig voneinander und/oder unabhängig voneinander betätigbar sein. Vorzugsweise können die Lenkeinheiten miteinander gekoppelt und/oder entkoppelt sein. Die Lenkeinheiten dienen insbesondere zum manuellen Lenken der Bearbeitungsmaschine. Vorzugsweise umfasst die jeweilige Lenkeinheit ein Schwenklager und/oder ein Lenkgestänge und/oder mindestens einen Handgriff, vorzugsweise mindestens zwei Handgriffe. Die Lenkeinheit, die die einem Bediener abgewandte Schiene-Gelände-Verlagerungseinheit verschwenkt, kann eine Parallelführung umfassen bzw. ausbilden. Vorzugsweise bildet der Träger zusammen mit einer Längsstange und zwei Querstangen eine Parallelführung aus, die ein einfaches Verschwenken der dem Bediener abgewandten Schiene-Gelände-Verlagerungseinheit ermöglicht.

Eine Bearbeitungsmaschine nach Anspruch 10 gewährleistet eine einfache, flexible, bedienerfreundliche und effiziente Gleisbearbeitung. Durch die hängende Anordnung der mindestens einen Bearbeitungseinheit an dem Träger ist die Gleisbearbeitung für einen Bediener frei beobachtbar. Hierdurch ist eine einfache Positionierung der mindestens einen Bearbeitungseinheit möglich. Vorzugsweise ist eine erste Bearbeitungseinheit an einer ersten Seite und eine zweite Bearbeitungseinheit an einer zweiten Seite des Trägers hängend angeordnet. Die erste Seite liegt in einer Querrichtung relativ zu dem Träger gegenüberliegend zu der zweiten Seite.

Eine Bearbeitungsmaschine nach Anspruch 11 gewährleistet eine einfache, flexible, bedienerfreundliche und effiziente Gleisbearbeitung. Durch die zwei Bearbeitungseinheiten ist eine effiziente Gleisbearbeitung möglich, beispielsweise ein Schrauben oder Klippen an zwei Seiten einer Schiene. Vorzugsweise sind die Bearbeitungseinheiten baugleich ausgebildet. Vorzugsweise umfasst die Bearbeitungsmaschine eine Steuereinrichtung zum Ansteuern der Bearbeitungseinheiten. Die Bearbeitungseinheiten sind unabhängig voneinander und/oder synchron zueinander positionierbar und/oder ansteuerbar.

Eine Bearbeitungsmaschine nach Anspruch 12 gewährleistet eine einfache, flexible, bedienerfreundliche und effiziente Gleisbearbeitung. Die Positioniereinrichtung dient zum Positionieren der mindestens einen Bearbeitungseinheit in einer Vertikalrichtung und/oder Horizontalrichtung. Vorzugsweise weisen mehrere Bearbeitungseinheiten mindestens eine zugehörige Positioniereinrichtung, insbesondere jeweils eine zugehörige Positioniereinrichtung auf. Die Positioniereinrichtung umfasst insbesondere mindestens einen Positionierantrieb zum Positionieren der mindestens einen Bearbeitungseinheit in einer Vertikalrichtung und/oder Horizontalrichtung. Vorzugsweise umfasst die Positioniereinrichtung eine Detektionseinheit, die die durchzuführende Gleisbearbeitungsaufgabe detektiert, so dass die Positioniereinrichtung automatisch die mindestens eine Bearbeitungseinheit positioniert. Hierzu weist die Bearbeitungsmaschine insbesondere eine Steuereinrichtung auf, die mit der Positioniereinrichtung in Signalverbindung steht. Die Steuereinrichtung wertet insbesondere Messdaten der Detektionseinheit aus und generiert hieraus Steuersignale für die mindestens eine Positioniereinrichtung und/oder die mindestens eine Bearbeitungseinheit.

Eine Bearbeitungsmaschine nach Anspruch 13 gewährleistet eine einfache, flexible, bedienerfreundliche und effiziente Gleisbearbeitung. Die an dem Träger angeordnete mindestens eine Bearbeitungseinheit ist mittels mindestens zwei Verlagerungseinheiten auf einer Schiene, insbesondere auf genau einer Schiene, angeordnet. Mittels des Auslegers ist der Träger mit der daran angeordneten mindestens einen Bearbeitungseinheit an der benachbarten zweiten Schiene abgestützt. Hierzu weist der Ausleger mindestens eine Querstange auf. Mittels der Querstange erfolgt eine Abstützung an der benachbarten zweiten Schiene. Vorzugsweise umfasst der Ausleger mindestens eine Abstützrolle, die drehbar an der Querstange gelagert ist. Die mindestens eine Abstützrolle liegt im Betrieb auf der benachbarten zweiten Schiene auf.

Alternativ kann die Querstange mit einem weiteren Träger verbunden sein, an dem mindestens zwei weitere Verlagerungseinheiten und mindestens eine weitere Bearbeitungseinheit angeordnet ist, um eine zeitgleiche Gleisbearbeitung im Bereich der zweiten Schiene durchzuführen. Die Querstange stützt sich somit über die mindestens zwei weiteren Verlagerungseinheiten auf der benachbarten Schiene ab.

Der Ausleger ist an dem Träger befestigt. Vorzugsweise ist der Ausleger lösbar an dem Träger befestigt, so dass der Ausleger für ein Verlagern im Gelände und/oder für das Eingleisen und/oder Ausgleisen der Bearbeitungsmaschine demontierbar ist. Vorzugsweise umfasst der Ausleger einen Halter, mittels dem die Querstange in einer Vertikalrichtung beabstandet zu dem Träger befestigt ist. Der Halter kann einteilig mit dem Träger verbunden sein oder lösbar an dem Träger befestigt sein.

Eine Bearbeitungsmaschine nach Anspruch 14 gewährleistet eine einfache, flexible, bedienerfreundliche und effiziente Gleisbearbeitung. Die Energieversorgungseinheit dient insbesondere zum Bereitstellen elektrischer Energie. Vorzugsweise umfasst die Energieversorgungseinheit mindestens einen Akkumulator. Der Akkumulator ist insbesondere wiederaufladbar und/oder auswechselbar. Die Energieversorgungseinheit ist an dem Träger angeordnet, insbesondere hängend angeordnet. Vorzugsweise ist die Energieversorgungseinheit zwischen einer ersten Verlagerungseinheit und einer zweiten Verlagerungseinheit angeordnet. Vorzugsweise dient die Energieversorgungseinheit zum Versorgen der mindestens einen Bearbeitungseinheit und/oder eines Verlagerungsantriebs mit Energie, insbesondere mit elektrischer Energie. Vorzugsweise umfasst die Energieversorgungseinheit eine Einstellmechanik zum Einstellen der Position der Energieversorgungseinheit in einer Querrichtung relativ zu dem Träger. Hierdurch kann der Schwerpunkt der Energieversorgungseinheit in der Querrichtung zu einer benachbarten zweiten Schiene hin verlagert werden, so dass die Standsicherheit der Bearbeitungsmaschine in Verbindung mit einem Ausleger verbessert wird.

Ferner liegt der Erfindung die Aufgabe zugrunde, ein Verfahren zu schaffen, das eine einfache, flexible, bedienerfreundliche und effiziente Gleisbearbeitung ermöglicht.

Diese Aufgabe wird durch ein Verfahren mit den Merkmalen des Anspruchs 15 gelöst. Die Vorteile des erfindungsgemäßen Verfahrens entsprechen den bereits beschriebenen Vorteilen der erfindungsgemäßen Bearbeitungsmaschine. Das erfindungsgemäße Verfahren kann insbesondere mit einem beliebigen Merkmal weitergebildet werden, das im Zusammenhang mit der erfindungsgemäßen Bearbeitungsmaschine beschrieben ist.

Die mindestens eine Schiene-Gelände-Verlagerungseinheit bildet insbesondere eine Lauffläche aus, die mindestens eine Gelände-Lauffläche und mindestens eine Schiene-Lauffläche umfasst. Das Verlagern der Bearbeitungsmaschine im Gelände erfolgt im Wesentlichen mittels der mindestens einen Gelände-Lauffläche. Die mindestens eine Gelände-Lauffläche hat im Gelände eine ausreichende Griffigkeit, so dass die Bearbeitungsmaschine in einfacher, flexibler, bedienerfreundlicher und effizienter Weise zu dem zu bearbeitenden Gleis verlagerbar, insbesondere verfahrbar, ist. Demgegenüber ermöglicht die mindestens eine Schiene-Lauffläche, insbesondere in Verbindung mit der mindestens einen Gelände-Lauffläche, ein einfaches und bedienerfreundliches Verlagern auf einer Schiene des Gleises. Hierzu bildet die Lauffläche insbesondere eine Vertiefung aus, so dass die Lauffläche sich relativ zu der Schiene selbst zentriert.

Vorzugsweise weist die mindestens eine Schiene-Gelände-Verlagerungseinheit eine zugehörige Lenkeinheit auf. Vorzugsweise umfasst die Bearbeitungsmaschine eine erste Lenkeinheit zum Verschwenken einer ersten Schiene-Gelände-Verlagerungseinheit und eine zweite Lenkeinheit zum Verschwenken einer zweiten Schiene-Gelände-Verlagerungseinheit relativ zu dem Träger. Die Lenkeinheiten können in gleichen Richtungen und/oder in entgegengesetzten Richtungen verschwenkt werden, insbesondere von einem Bediener manuell verschwenkt werden. Werden die Lenkeinheiten in gleichen Richtungen und um gleiche Winkel verschwenkt, so wird die Bearbeitungsmaschine insbesondere linear und schräg verlagert, also querversetzt. Werden die Lenkeinheiten demgegenüber in entgegengesetzten Richtungen verschwenkt, so wird die Bearbeitungsmaschine insbesondere entlang einer Kurve verlagert.

Weitere Merkmale, Vorteile und Einzelheiten der Erfindung ergeben sich aus der nachfolgenden Beschreibung mehrerer Ausführungsbeispiele. Es zeigen:
- Fig. 1: eine Draufsicht auf eine Bearbeitungsmaschine zur Gleisbearbeitung gemäß einem ersten Ausführungsbeispiel,
- Fig. 2: eine Draufsicht auf die in Fig. 1 dargestellte Gleisbearbeitungsmaschine ohne das zu bearbeitende Gleis,
- Fig. 3: eine Seitenansicht der Bearbeitungsmaschine in Fig. 1,
- Fig. 4: einen Schnitt durch die Bearbeitungsmaschine entlang der Schnittlinie IV-IV in Fig. 3,
- Fig. 5: eine Seitenansicht einer Bearbeitungsmaschine zur Gleisbearbeitung gemäß einem zweiten Ausführungsbeispiel,
- Fig. 6: eine Draufsicht auf die Bearbeitungsmaschine in Fig. 5,
- Fig. 7: eine Draufsicht auf die Bearbeitungsmaschine in Fig. 5 in einer ersten Lenkstellung,
- Fig. 8: eine Draufsicht auf die Bearbeitungsmaschine in Fig. 5 in einer zweiten Lenkstellung,
- Fig. 9: eine Seitenansicht einer Bearbeitungsmaschine zur Gleisbearbeitung gemäß einem dritten Ausführungsbeispiel,
- Fig. 10: eine Draufsicht auf die Bearbeitungsmaschine in Fig. 9,
- Fig. 11: eine Draufsicht auf die Bearbeitungsmaschine in Fig. 9 in einer ersten Lenkstellung,
- Fig. 12: eine Draufsicht auf die Bearbeitungsmaschine in Fig. 9 in einer zweiten Lenkstellung,
- Fig. 13: eine vergrößerte Frontansicht einer Schiene-Gelände-Verlagerungseinheit der Bearbeitungsmaschine in Fig. 9 in einer Einstellung für einen breiten Schienenkopf, und
- Fig. 14: eine vergrößerte Frontansicht der Schiene-Gelände-Verlagerungseinheit in Fig. 13 in einer Einstellung für einen schmalen Schienenkopf.

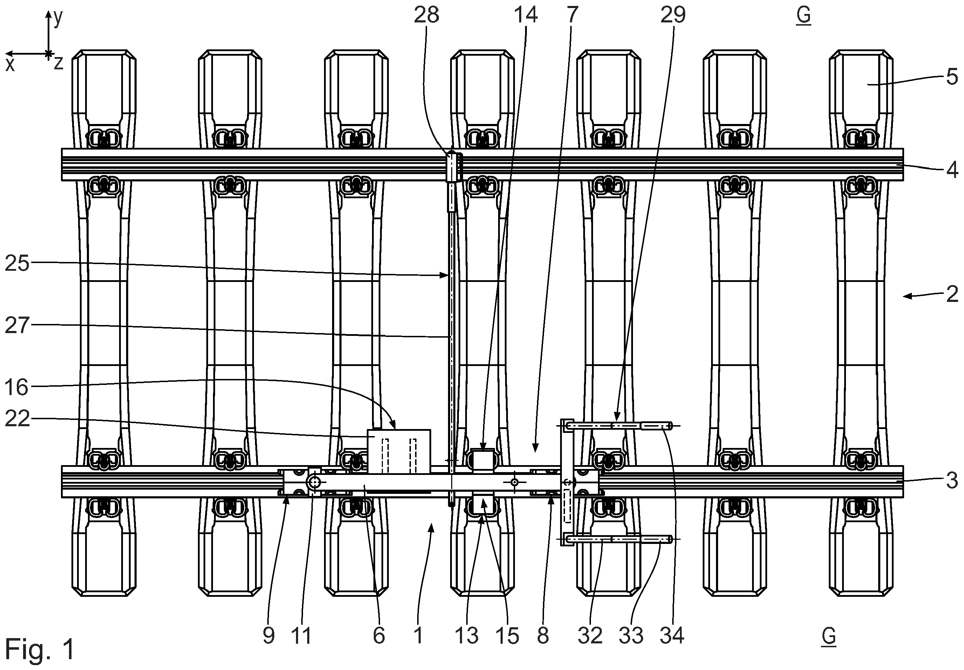

Nachfolgend ist anhand der Fig. 1 bis 4 ein erstes Ausführungsbeispiel der Erfindung beschrieben. Die in den Fig. 1 bis 4 dargestellte Bearbeitungsmaschine 1 dient zur Bearbeitung eines Gleises 2. Das Gleis 2 umfasst eine erste Schiene 3 und eine zweite Schiene 4, die auf Schwellen 5 befestigt sind. Die Schienen 3, 4 erstrecken sich in einer Schienenlängsrichtung und sind in einer senkrecht zu der Schienenlängsrichtung verlaufenden Schienenquerrichtung beabstandet zueinander angeordnet. Das Gleis 2 ist von Gelände G umgeben.

Die Bearbeitungsmaschine 1 umfasst einen Träger 6, der eine Längsrichtung x und eine senkrecht dazu verlaufende Querrichtung y definiert. Der Träger 6 erstreckt sich im Wesentlichen in der Längsrichtung x. Die Bearbeitungsmaschine 1 umfasst ferner eine Verlagerungseinrichtung 7, die an dem Träger 6 angeordnet ist.

Die Verlagerungseinrichtung 7 weist eine erste Schiene-Gelände-Verlagerungseinheit 8 und eine zweite Schiene-Gelände-Verlagerungseinheit 9 auf. Die erste Schiene-Gelände-Verlagerungseinheit 8 ist mittels eines gabelförmigen ersten Befestigungselements 10 an einem ersten Ende des Trägers 6 befestigt, wohingegen die zweite Schiene-Gelände-Verlagerungseinheit 9 mittels eines gabelförmigen zweiten Befestigungselements 11 an einem zweiten Ende des Trägers 6 befestigt ist. Die Schiene-Gelände-Verlagerungseinheiten 8, 9 dienen zum Verlagern des Trägers 6 auf der Schiene 3.

Der Träger 6, die Schiene-Gelände-Verlagerungseinheiten 8, 9 und die Befestigungselemente 10, 11 begrenzen einen Aufnahmeraum 12, der an einer dem Träger 6 abgewandten Seite offen ist. Der Aufnahmeraum 12 dient zur zumindest teilweisen Aufnahme einer ersten Bearbeitungseinheit 13, einer zweiten Bearbeitungseinheit 14, einer zugehörigen Positioniereinrichtung 15 und einer zugehörigen Energieversorgungseinheit 16.

Die Positioniereinrichtung 15 ist hängend an einer Unterseite des Trägers 6 befestigt. Die erste Bearbeitungseinheit 13 ist in Querrichtung y betrachtet an einer ersten Seite des Trägers 6 an der Positioniereinrichtung 15 befestigt, wohingegen die zweite Bearbeitungseinheit 14 an einer zweiten Seite des Trägers 6 an der Positioniereinrichtung 15 befestigt ist. Die Positioniereinrichtung 15 umfasst einen ersten Positionierantrieb 17 zum Positionieren der ersten Bearbeitungseinheit 13 und/oder der zweiten Bearbeitungseinheit 14 in der Querrichtung y. Ferner umfasst die Positioniereinrichtung 15 einen zweiten Positionierantrieb 18 zum Positionieren der ersten Bearbeitungseinheit 13 und der zweiten Bearbeitungseinheit 14 in einer Vertikalrichtung z. Die Vertikalrichtung z verläuft senkrecht zu der Längsrichtung x und der Querrichtung y. Die Längsrichtung x, die Querrichtung y und die Vertikalrichtung z bilden ein kartesisches Koordinatensystem.

Die Bearbeitungseinheiten 13, 14 dienen beispielsweise zum Schrauben. Alternativ können die Bearbeitungseinheiten 13, 14 auch zum Bohren, Klippen, Nageltreiben, Nagelziehen und/oder Schleifen ausgebildet sein. Die Bearbeitungseinheiten 13, 14 sind mittels der Positioniereinrichtung 15 hängend an der Unterseite des Trägers 6 befestigt. Die Bearbeitungseinheiten 13, 14 umfassen jeweils einen Werkzeugantrieb 19, der ein Bearbeitungswerkzeug 20 um eine Drehachse 21 drehantreibt.

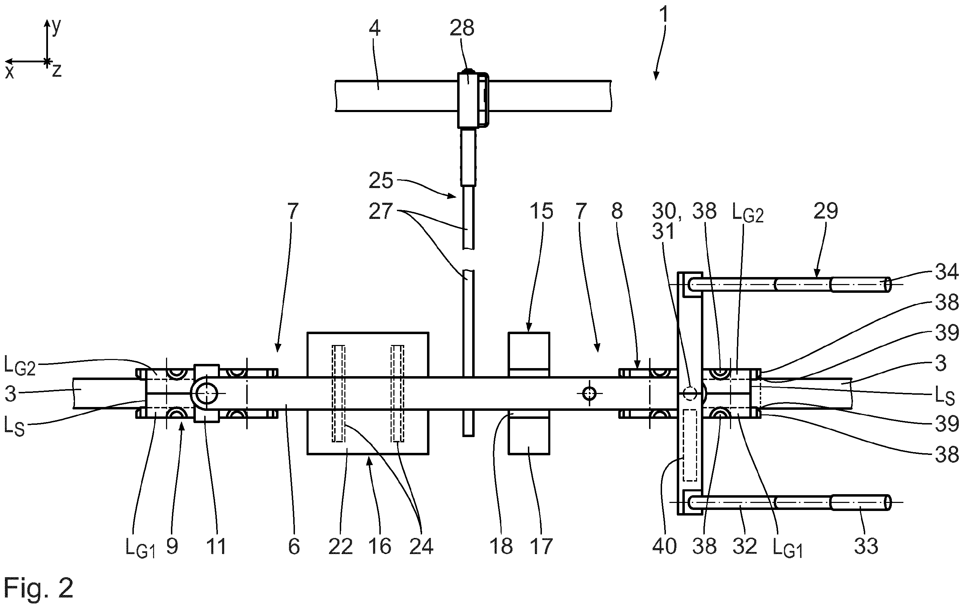

Die Energieversorgungseinheit 16 ist in der Längsrichtung x zwischen der Positioniereinrichtung 15 und der zweiten Schiene-Gelände-Verlagerungseinheit 9 hängend an dem Träger 6 angeordnet. Die Energieversorgungseinheit 16 umfasst ein Gehäuse 22, in dem mehrere Akkumulatoren 23 angeordnet sind. Die Akkumulatoren 23 sind parallel und/oder in Reihe geschaltet. Die Akkumulatoren 23 dienen zur Bereitstellung von elektrischer Energie. Die Energieversorgungseinheit 16 umfasst ferner eine Einstellmechanik 24, die ein Einstellen der Position des Gehäuses 22 relativ zu dem Träger 6 in der Querrichtung y ermöglicht. Die Einstellmechanik 24 ist beispielsweise als Linearführung ausgebildet. Die Linearführung ist insbesondere in einer gewünschten Position arretierbar. Fig. 2 zeigt das Gehäuse 22 in einer Position mittig zu dem Träger 6, wohingegen Fig. 1 das Gehäuse 22 in einer zu der benachbarten Schiene 4 hin verlagerten Position zeigt.

Die Verlagerungseinrichtung 7 umfasst einen Ausleger 25. Der Ausleger 25 ist in der Längsrichtung x zwischen den Bearbeitungseinheiten 13, 14 und der Energieversorgungseinheit 16 an dem Träger 6 befestigt. Der Ausleger 25 weist einen Halter 26, eine Querstange 27 und eine Abstützrolle 28 auf. Der Halter 26 ist an dem Träger 6 befestigt und erstreckt sich in der Vertikalrichtung z in den Aufnahmeraum 12 hinein. An dem Halter 26 ist lösbar die Querstange 27 befestigt, die sich in der Querrichtung y bis zu der benachbarten Schiene 4 erstreckt. An dem freien Ende der Querstange 27 ist die Abstützrolle 28 drehbar gelagert. Die Abstützrolle 28 dient zum Abstützen des Trägers 6 und der daran angeordneten Schiene-Gelände-Verlagerungseinheiten 8, 9 an der benachbarten Schiene 4. Dies ist in Fig. 1 veranschaulicht.

Die Verlagerungseinrichtung 7 umfasst eine Lenkeinheit 29 zum Verschwenken der ersten Schiene-Gelände-Verlagerungseinheit 8 um eine vertikale Schwenkachse 30. Die Lenkeinheit 29 umfasst ein Schwenklager 31, ein Lenkgestänge 32 und Handgriffe 33, 34. Das gabelförmige Befestigungselement 10 ist mittels des Schwenklagers 31 an dem Träger 6 um die Schwenkachse 30 verschwenkbar gelagert. An dem gabelförmigen Befestigungselement 10 ist das Lenkgestänge 32 befestigt. Das Lenkgestänge 32 ist U-förmig ausgebildet. An den freien Enden des Lenkgestänges 32 ist der erste Handgriff 33 und der zweite Handgriff 34 befestigt. Die Handgriffe 33, 34 dienen zum Führen und Lenken der Bearbeitungsmaschine 1 auf der Schiene 3 bzw. den Schienen 3, 4 und in dem das Gleis 2 umgebenden Gelände G. Die zweite Schiene-Gelände-Verlagerungseinheit 9 ist nicht lenkbar an dem Träger 6 angeordnet. Hierzu ist das gabelförmige Befestigungselement 11 fest mit dem Träger 6 verbunden.

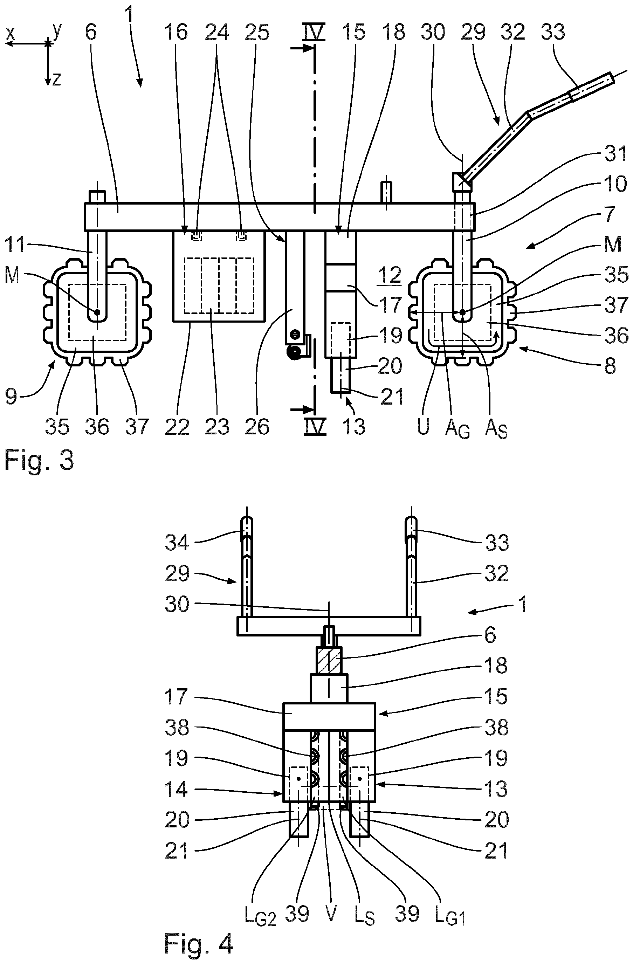

Die Schiene-Gelände-Verlagerungseinheiten 8, 9 sind baugleich ausgebildet, so dass nachfolgend lediglich die Schiene-Gelände-Verlagerungseinheit 8 im Detail beschrieben ist. Die Schiene-Gelände-Verlagerungseinheit 8 umfasst einen Verlagerungsgrundkörper 35, einen Verlagerungsantrieb 36 und ein Kontaktelement 37. Der Verlagerungsgrundkörper 35 ist an dem Befestigungselement 10 bzw. 11 befestigt und relativ zu diesem nicht rotierbar. Der Verlagerungsgrundkörper 35 ist im Querschnitt polygonal, insbesondere rechteckförmig, und insbesondere quadratisch ausgebildet und hat abgerundete Ecken. Der Verlagerungsgrundkörper 35 definiert eine Mittellängsachse M. Die Mittellängsachse M verläuft in der in Fig. 3 dargestellten Lenkstellung parallel zu der Querrichtung y. Das Kontaktelement 37 erstreckt sich in einer Umfangsrichtung U um den Verlagerungsgrundkörper 35 und hat eine geschlossene Form. Das Kontaktelement 37 ist insbesondere als Kette und/oder Riemen ausgebildet. Das Kontaktelement 37 ist relativ zu dem Verlagerungsgrundkörper 35 in der Umfangsrichtung U um die Mittellängsachse M mittels des Verlagerungsantriebs 36 verlagerbar. Der Verlagerungsantrieb 36 ist in den Verlagerungsgrundkörper 35 integriert. Das Kontaktelement 37 ist beispielsweise aus einem Gummimaterial ausgebildet.

Das jeweilige Kontaktelement 37 bildet eine Lauffläche aus, die in der Querrichtung y bzw. in Richtung der Mittellängsachse M eine erste Gelände-Lauffläche L_{G1}, eine Schiene-Lauffläche Ls und eine zweite Gelände-Lauffläche L_{G2} umfasst. Die Schiene-Lauffläche Ls ist in Richtung der Mittellängsachse M zwischen den Gelände-Laufflächen L_{G1}, L_{G2} angeordnet. Die Gelände-Laufflächen L_{G1}, L_{G2} und die Schiene-Lauffläche Ls laufen entsprechend dem Kontaktelement 37 um die Mittellängsachse M bzw. den Verlagerungsgrundkörper 35 um.

Die Gelände-Laufflächen L_{G1}, L_{G2} sind in der Umfangsrichtung U und in Richtung der Mittellängsachse M profiliert ausgebildet. Hierzu weist das Kontaktelement 37 Erhöhungen 38 auf, die beispielsweise als Noppen oder Stollen ausgebildet sind. Die Erhöhungen 38 bilden zumindest teilweise die Gelände-Laufflächen L_{G1}, L_{G2} aus. Die Gelände-Laufflächen L_{G1}, L_{G2} haben einen maximalen Abstand A_{G} von der Mittellängsachse M, wohingegen die Schiene-Lauffläche Ls einen maximalen Abstand As von der Mittellängsachse M hat. Es gilt: A_{G} > As. Für den Abstand A_{G} gilt insbesondere: 5 cm ≤ A_{G} ≤ 30 cm, insbesondere 10 cm ≤ A_{G} ≤ 25 cm, und insbesondere 15 cm ≤ A_{G} ≤ 20 cm. Für den Abstand As gilt insbesondere: 4 cm ≤ A_{S} ≤ 29 cm, insbesondere 9 cm ≤ A_{S} ≤ 24 cm, und insbesondere 14 cm ≤ A_{S} ≤ 19 cm. Für eine Differenz ΔA = A_{G} - As gilt insbesondere: 1 cm ≤ ΔA ≤ 8 cm, insbesondere 2 cm ≤ ΔA ≤ 7 cm, und insbesondere 3 cm ≤ ΔA ≤ 6 cm.

Die Lauffläche bildet im Querschnitt zumindest abschnittsweise eine Vertiefung V zur Aufnahme eines Schienenkopfs der Schiene 3 aus. Die Vertiefung V erweitert sich im Querschnitt in einer Richtung quer zu der Mittellängsachse M. Hierzu weisen die Erhöhungen 38 in einem der Schiene-Lauffläche Ls zugewandten Bereich 39 eine Fase und/oder eine Rundung auf. Durch den sich erweiternden Querschnitt der Vertiefung V können unterschiedlich breite Schienenköpfe aufgenommen werden.

Der erste Positionierantrieb 17, der zweite Positionierantrieb 18, die Werkzeugantriebe 19 und die Verlagerungsantriebe 36 sind insbesondere elektrisch ausgebildet. Zum Ansteuern umfasst die Bearbeitungsmaschine 1 eine Steuereinrichtung 40. Die Steuereinrichtung 40 ist an dem Lenkgestänge 32 angeordnet.

Die Funktionsweise der Bearbeitungsmaschine 1 ist wie folgt:
Die Bearbeitungsmaschine 1 muss zur Gleisbearbeitung zunächst zu dem zu bearbeitenden Gleis 2 bzw. Gleisabschnitt verlagert werden. Hierzu ist die Querstange 27 und die daran angeordnete Abstützrolle 28 zunächst von dem Halter 26 demontiert. Die Bearbeitungsmaschine 1 wird von einem Bediener in dem Gelände G mittels der Schiene-Gelände-Verlagerungseinheiten 8, 9 zu dem Gleis 2 verlagert bzw. verfahren. Hierzu werden die Kontaktelemente 37 mittels der Verlagerungsantriebe 36 in der Umfangsrichtung U um den jeweiligen Verlagerungsgrundkörper 35 verlagert. Mittels der Lenkeinheit 29 kann der Bediener die Bearbeitungsmaschine 1 in eine gewünschte Richtung lenken. Durch die Gelände-Laufflächen L_{G1}, L_{G2} hat die Bearbeitungsmaschine 1 im Gelände G eine ausreichende Griffigkeit, so dass die Schiene-Gelände-Verlagerungseinheiten 8, 9 im Gelände G eine gute Traktion haben. Dadurch, dass der Abstand A_{G} größer als der Abstand As ist, wird die Schiene-Lauffläche Ls gleichzeitig vor Beschädigungen im Gelände G geschützt.

Befindet sich die Bearbeitungsmaschine 1 am Gleis 2, so wird die Bearbeitungsmaschine 1 manuell auf die Schiene 3 gehoben oder mithilfe der Schiene-Gelände-Verlagerungseinheiten 8, 9 auf die Schiene 3 gefahren und die Querstange 27 mit der Abstützrolle 28 an dem Halter 26 montiert, so dass sich die Bearbeitungsmaschine 1 mittels des Auslegers 25 an der benachbarten Schiene 4 abstützt. Um die Standsicherheit der Bearbeitungsmaschine 1 zu erhöhen, wird das Gehäuse 22 mit den darin angeordneten Akkumulatoren 23 mittels der Einstellmechanik 24 zu der Schiene 4 hin verlagert, so dass der Schwerpunkt der Bearbeitungsmaschine 1 sich zwischen den Schienen 3, 4 befindet.

Der Schienenkopf der Schiene 3 befindet sich nun in den Vertiefungen V der Laufflächen, wobei die Schiene-Laufflächen Ls der Schiene-Gelände-Verlagerungseinheiten 8, 9 auf dem Schienenkopf der Schiene 3 aufliegen. Die Gelände-Laufflächen L_{G1}, L_{G2} liegen seitlich gegen den Schienenkopf an und zentrieren die Schiene-Gelände-Verlagerungseinheiten 8, 9 auf der Schiene 3.

Die Bearbeitungseinheiten 13, 14 können nun mittels der Positioniereinrichtung 15 in der Querrichtung y justiert werden. Anschließend erfolgt die Gleisbearbeitung. Hierzu werden die Bearbeitungseinheiten 13, 14 in der Vertikalrichtung z abgesenkt, die Bearbeitungswerkzeuge 20 mittels der Werkzeugantriebe 19 drehangetrieben und anschließend die Bearbeitungseinheiten 13, 14 wieder angehoben. Die Bearbeitungsmaschine 1 wird nun mittels der Schiene-Gelände-Verlagerungseinheiten 8, 9 in der Schienenlängsrichtung zu der nächsten zu bearbeitenden Gleisstelle verfahren, wo die oben beschriebene Gleisbearbeitung wiederholt wird.

Ist die Gleisbearbeitung beendet, so wird die Bearbeitungsmaschine 1 ausgegleist. Hierzu wird zunächst das Gehäuse 22 mit den Akkumulatoren 23 mittels der Einstellmechanik 24 wieder in eine mittige Position zu dem Träger 6 gebracht. Anschließend wird die Querstange 27 mit der Abstützrolle 28 von dem Halter 26 demontiert und die Bearbeitungsmaschine 1 manuell von der Schiene 3 gehoben oder mithilfe der Schiene-Gelände-Verlagerungseinheiten 8, 9 von der Schiene 3 gefahren. Die Bearbeitungsmaschine 1 kann nun in der bereits beschriebenen Weise in dem Gelände G verfahren werden.

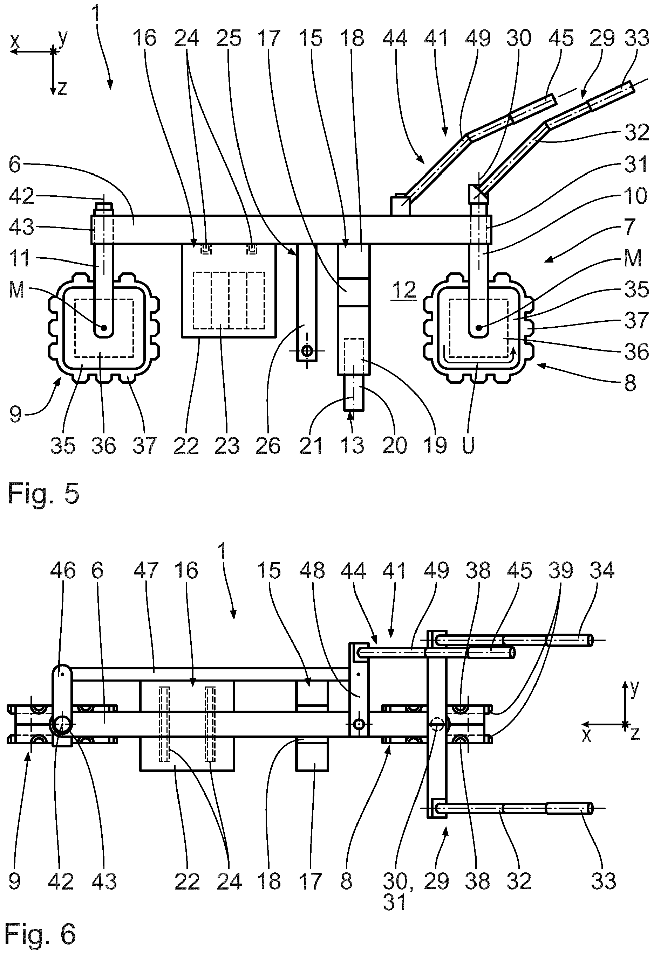

Nachfolgend ist anhand der Fig. 5 bis 8 ein zweites Ausführungsbeispiel der Erfindung beschrieben. Im Unterschied zu dem ersten Ausführungsbeispiel weist die Bearbeitungsmaschine 1 zusätzlich zu der ersten Lenkeinheit 29 eine zweite Lenkeinheit 41 zum Verschwenken der zweiten Schiene-Gelände-Verlagerungseinheit 9 um eine vertikale Schwenkachse 42 auf. Die zweite Lenkeinheit 41 umfasst ein Schwenklager 43, ein Lenkgestänge 44 und einen dritten Handgriff 45. Das gabelförmige Befestigungselement 11 ist mittels des Schwenklagers 43 um die Schwenkachse 42 verschwenkbar an dem Träger 6 gelagert. Das Lenkgestänge 44 umfasst eine erste Querstange 46, eine erste Längsstange 47, eine zweite Querstange 48 und eine zweite Längsstange 49. Die erste Querstange 46 ist drehfest mit dem zweiten Befestigungselement 11 verbunden. Die erste Längsstange 47 ist gelenkig an der ersten Querstange 46 und an der zweiten Querstange 48 angelenkt, wobei die zweite Querstange 48 wiederum gelenkig an dem Träger 6 angelenkt ist. Der Träger 6, die erste Querstange 46, die erste Längsstange 47 und die zweite Querstange 48 bilden auf diese Weise eine Parallelführung aus. Die zweite Längsstange 49 ist in der Querrichtung y beabstandet zu dem Träger 6 an der zweiten Querstange 48 befestigt und dient zum Betätigen der Parallelführung. An der zweiten Längsstange 49 ist der dritte Handgriff 45 befestigt. Die zweite Lenkeinheit 41 ist stufenlos oder in Stufen in einer gewünschten Schwenkstellung arretierbar.

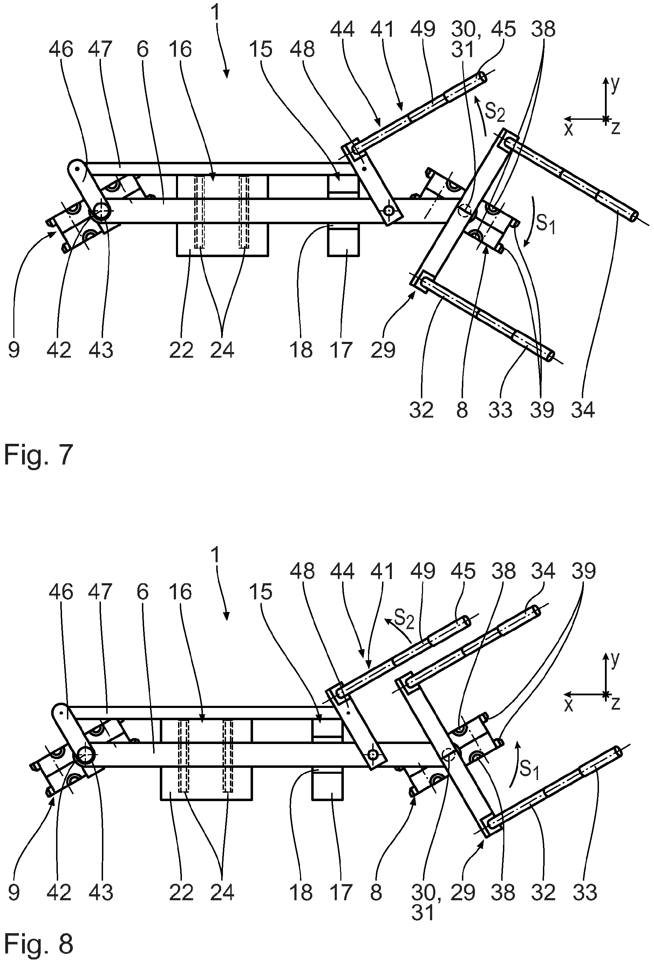

In einer ersten Lenkstellung, die in Fig. 7 dargestellt ist, werden die Lenkeinheiten 29, 41 in unterschiedlichen Schwenkrichtungen S₁ und S₂ betätigt, so dass die Schiene-Gelände-Verlagerungseinheiten 8, 9 entgegengesetzt zueinander verschwenkt werden. Hierdurch kann die Bearbeitungsmaschine 1 um enge Kurven verfahren werden. In der ersten Lenkstellung kann die Bearbeitungsmaschine 1 somit mit einem kleinen Wenderadius eine Kurvenfahrt durchführen.

In einer zweiten Lenkstellung, die in Fig. 8 dargestellt ist, werden die Lenkeinheiten 29, 41 in gleichen Schwenkrichtungen S₁, S₂ um die Schwenkachsen 30. 42 verschwenkt, so dass die Schiene-Gelände-Verlagerungseinheiten 8, 9 synchron zueinander verschwenkt werden. Hierdurch sind die Schiene-Gelände-Verlagerungseinheiten 8, 9 im Wesentlichen parallel zueinander ausgerichtet, so dass die Bearbeitungsmaschine 1 linear und schräg verfahren wird, also querversetzt wird. Hinsichtlich des weiteren Aufbaus und der weiteren Funktionsweise der Bearbeitungsmaschine 1 wird auf das vorangegangene Ausführungsbeispiel verwiesen.

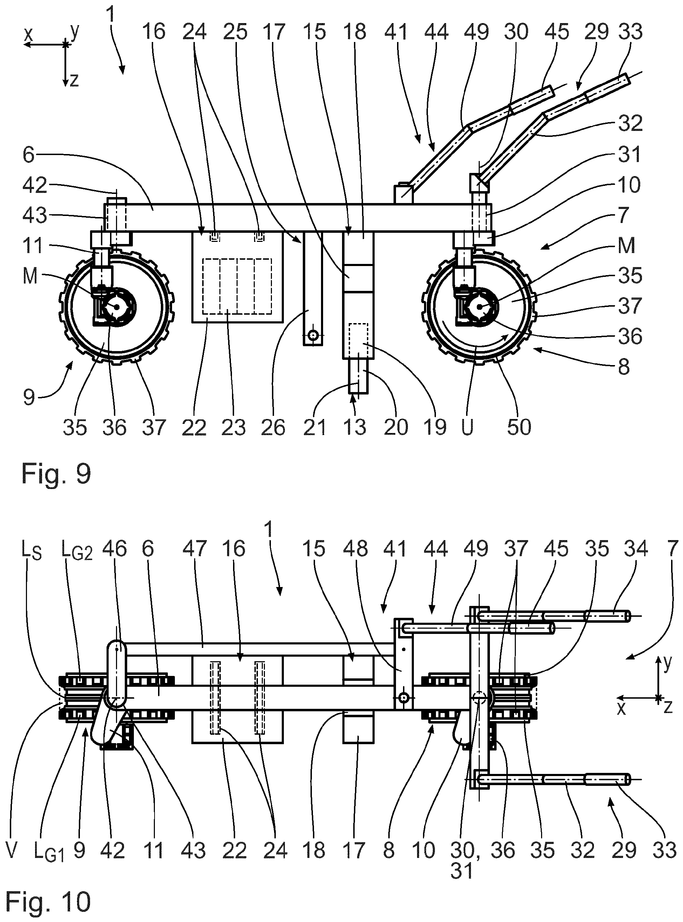

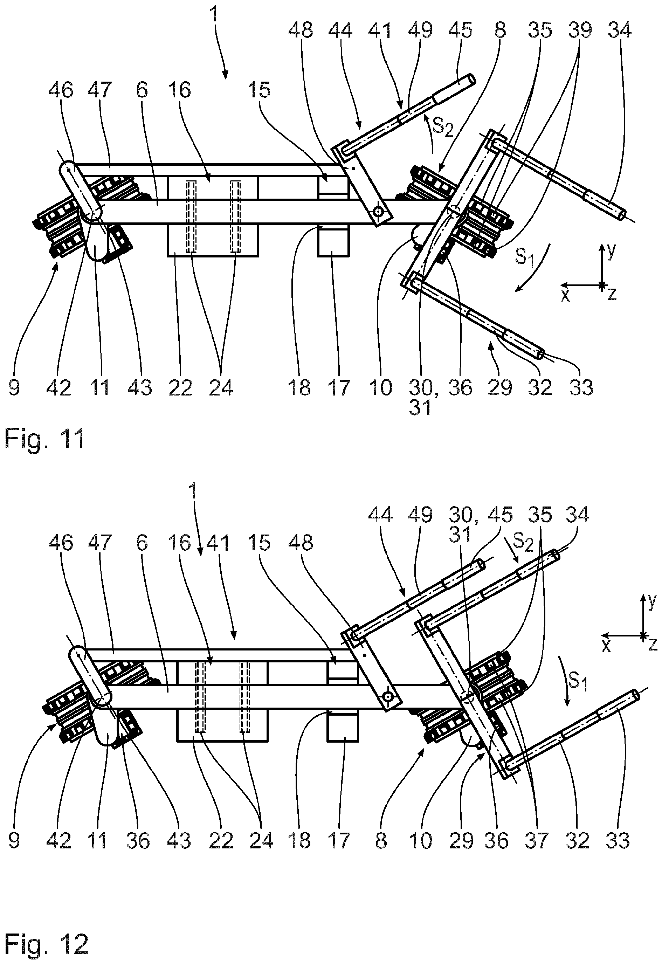

Nachfolgend ist anhand der Fig. 9 bis 14 ein drittes Ausführungsbeispiel der Erfindung beschrieben. Die Bearbeitungsmaschine 1 weist entsprechend dem zweiten Ausführungsbeispiel eine erste Lenkeinheit 29 zum Verschwenken der ersten Schiene-Gelände-Verlagerungseinheit 8 und eine zweite Lenkeinheit 41 zum Verschwenken der zweiten Schiene-Gelände-Verlagerungseinheit 9 auf. Fig. 11 zeigt die Bearbeitungsmaschine in der ersten Lenkstellung, wohingegen Fig. 12 die Bearbeitungseinheit 1 in der zweiten Lenkstellung zeigt.

Die erste Schiene-Gelände-Verlagerungseinheit 8 ist mittels des Befestigungselements 10 einseitig und um die Mittellängsachse M rotierbar an dem Träger 6 befestigt. Entsprechend ist die zweite Schiene-Gelände-Verlagerungseinheit 9 mittels des Befestigungselements 11 einseitig und um die Mittellängsachse M rotierbar an dem Träger 6 befestigt.

Die Schiene-Gelände-Verlagerungseinheiten 8, 9 sind baugleich ausgebildet, so dass nachfolgend lediglich die Schiene-Gelände-Verlagerungseinheit 8 beschrieben ist. Die Schiene-Gelände-Verlagerungseinheit 8 weist einen radförmigen bzw. im Querschnitt runden Verlagerungsgrundkörper 36 auf, der mittels des zugehörigen Verlagerungsantriebs 36 um die Mittellängsachse M drehantreibbar ist. An dem Verlagerungsgrundkörper 35 sind mittels Gewindeverbindungen 50 ringförmige Kontaktelemente 37 befestigt. Die ringförmigen Kontaktelemente 37 bilden die Gelände-Laufflächen L_{G1}, L_{G2} aus, wohingegen der Verlagerungsgrundkörper 35 die dazwischen angeordnete Schiene-Lauffläche Ls ausbildet. Die Kontaktelemente 37 sind in der Umfangsrichtung U und in Richtung der Mittellängsachse M profiliert ausgebildet und weisen die Erhöhungen 38 auf. Die Kontaktelemente 37 bilden Wangen für den Verlagerungsgrundkörper 35 aus.

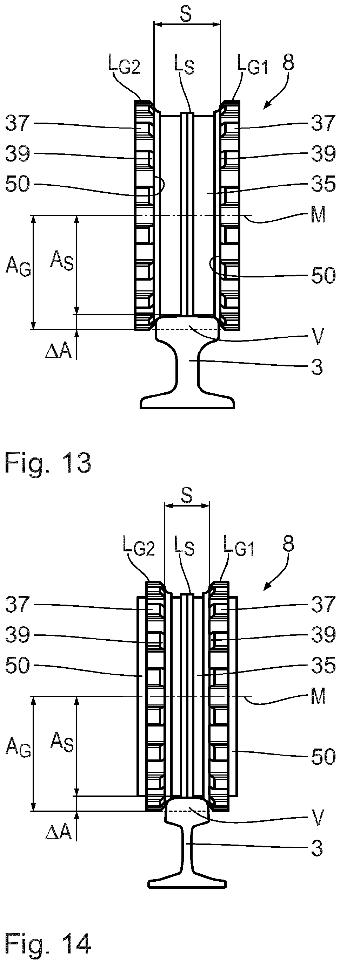

Die Kontaktelemente 37 sind mittels der jeweiligen Gewindeverbindung 50 relativ zu dem Verlagerungsgrundkörper 35 in Richtung der Mittellängsachse M verstellbar, so dass die Vertiefung V an unterschiedlich breite Schienenköpfe der Schiene 3 angepasst werden kann. Dies ist in den Fig. 13 und 14 veranschaulicht. Ein Abstand s zwischen den Kontaktelementen 37 ist somit in Richtung der Mittellängsachse M einstellbar. Die Kontaktelemente 37 sind hierzu in der gewünschten Position relativ zu dem Verlagerungsgrundkörper 35 arretierbar. Hinsichtlich des weiteren Aufbaus und der weiteren Funktionsweise wird auf die vorangegangenen Ausführungsbeispiele verwiesen.

## Patentansprüche

1. Bearbeitungsmaschine zur Gleisbearbeitung mit
- einem Träger (6),
- einer an dem Träger (6) angeordneten Verlagerungseinrichtung (7),
- mindestens einer an dem Träger (6) angeordneten Bearbeitungseinheit (13, 14) zur Bearbeitung eines Gleises (2), und
- mindestens einem Handgriff (33, 34, 45) zum manuellen Führen der Bearbeitungsmaschine (1),
**dadurch gekennzeichnet,**
**dass** die Verlagerungseinrichtung (7) mindestens eine Schiene-Gelände-Verlagerungseinheit (8, 9) zum Verlagern der Bearbeitungsmaschine (1) auf einer Schiene (3) und im Gelände (G) umfasst.

2. Bearbeitungsmaschine nach Anspruch 1, **dadurch gekennzeichnet dass** die mindestens eine Schiene-Gelände-Verlagerungseinheit (8, 9) eine Lauffläche (L_{G1}, L_{S}, L_{G2}) ausbildet, die mindestens eine Gelände-Lauffläche (L_{G1}, L_{G2}) und mindestens eine Schiene-Lauffläche (Ls) umfasst.

3. Bearbeitungsmaschine nach Anspruch 1 oder 2, **dadurch gekennzeichnet**
**dass** die mindestens eine Schiene-Gelände-Verlagerungseinheit (8, 9) eine Lauffläche (L_{G1}, L_{S}, L_{G2}) ausbildet, die zwei Gelände-Laufflächen (L_{G1}, L_{G2}) und eine dazwischen angeordnete Schiene-Lauffläche (Ls) umfasst.

4. Bearbeitungsmaschine nach mindestens einem der vorangehenden Ansprüche, **dadurch gekennzeichnet,**
**dass** die mindestens eine Schiene-Gelände-Verlagerungseinheit (8, 9) eine Lauffläche (L_{G1}, Ls, L_{G2}) mit einer Vertiefung (V) zur Aufnahme eines Schienenkopfs einer Schiene (3) ausbildet.

5. Bearbeitungsmaschine nach mindestens einem der vorangehenden Ansprüche, **dadurch gekennzeichnet,**
**dass** die mindestens eine Schiene-Gelände-Verlagerungseinheit (8, 9) einen Verlagerungsantrieb (36) umfasst.

6. Bearbeitungsmaschine nach mindestens einem der vorangehenden Ansprüche, **dadurch gekennzeichnet,**
**dass** die Verlagerungseinrichtung (7) mindestens eine Lenkeinheit (29) umfasst.

7. Bearbeitungsmaschine nach mindestens einem der vorangehenden Ansprüche, **dadurch gekennzeichnet**
**dass** die Verlagerungseinrichtung (7) eine erste Schiene-Gelände-Verlagerungseinheit (8) und eine zweite Schiene-Gelände-Verlagerungseinheit (9) umfasst, die in einer Längsrichtung (x) voneinander beabstandet an dem Träger (6) angeordnet sind.

8. Bearbeitungsmaschine nach Anspruch 7, **dadurch gekennzeichnet, dass** die mindestens eine Bearbeitungseinheit (13, 14) in der Längsrichtung (x) zwischen der ersten Schiene-Gelände-Verlagerungseinheit (8) und der zweiten Schiene-Gelände-Verlagerungseinheit (9) angeordnet ist.

9. Bearbeitungsmaschine nach Anspruch 7 oder 8, **dadurch gekennzeichnet,**
**dass** die Verlagerungseinrichtung (7) eine erste Lenkeinheit (29) zum Verschwenken der ersten Schiene-Gelände-Verlagerungseinheit (8) und eine zweite Lenkeinheit (41) zum Verschwenken der zweiten Schiene-Gelände-Verlagerungseinheit (9) relativ zu dem Träger (6) umfasst.

10. Bearbeitungsmaschine nach mindestens einem der vorangehenden Ansprüche, **dadurch gekennzeichnet,**
**dass** die mindestens eine Bearbeitungseinheit (13, 14) hängend an dem Träger (6) angeordnet ist.

11. Bearbeitungsmaschine nach mindestens einem der vorangehenden Ansprüche, **dadurch gekennzeichnet,**
**dass** eine erste Bearbeitungseinheit (13) in einer Querrichtung (y) an einer ersten Seite des Trägers (6) und eine zweite Bearbeitungseinheit (14) an einer gegenüberliegenden zweiten Seite des Trägers (6) angeordnet ist.

12. Bearbeitungsmaschine nach mindestens einem der vorangehenden Ansprüche, **gekennzeichnet**
**durch** eine Positioniereinrichtung (15) zum Positionieren der mindestens einen Bearbeitungseinheit (13, 14).

13. Bearbeitungsmaschine nach mindestens einem der vorangehenden Ansprüche, **dadurch gekennzeichnet,**
**dass** die Verlagerungseinrichtung (7) einen Ausleger (25) zum Abstützen auf einer Schiene (4) umfasst.

14. Bearbeitungsmaschine nach mindestens einem der vorangehenden Ansprüche, **gekennzeichnet**
**durch** eine Energieversorgungseinheit (16), die insbesondere an dem Träger (6) angeordnet ist.

15. Verfahren zur Gleisbearbeitung mit den Schritten:
- Bereitstellen einer Bearbeitungsmaschine (1) nach mindestens einem der vorangehenden Ansprüche,
- Verlagern der Bearbeitungsmaschine (1) im Gelände (G) zu einem Gleis (2) und auf einer Schiene (3) des Gleises (2) mittels der mindestens einen Schiene-Gelände-Verlagerungseinheit (8, 9), und
- Bearbeiten des Gleises (2) mittels der mindestens einen Bearbeitungseinheit (13, 14).
